# EUROPEAN PATENT SPECIFICATION

(11) **EP 3 218 773 B1**
(45) Date of publication and mention of the grant of the patent: **04.09.2019**
(21) Application number: 15852727.5
(22) Date of filing: 20.10.2015
(51) Int. Cl.: E21B 47/12, E21B 43/12, H04B 3/54

(54) **METHODS OF COMMUNICATION SIGNAL PROCESSING FOR DOWNHOLE APPLICATIONS**
VERFAHREN ZUR KOMMUNIKATIONSSIGNALVERARBEITUNG FÜR BOHRLOCHANWENDUNGEN
PROCÉDÉS DE TRAITEMENT DE SIGNAL DE COMMUNICATION POUR DES APPLICATIONS DE TROU VERS LE BAS

(30) Priority: 21.10.2014 US 201462066588 P
(43) Date of publication of application: 20.09.2017
(73) Proprietor: Pietryka, Jedrzej, Gdansk (PL); Szewczyk, Janusz, Gdansk (PL); Krzeminski, Zbigniew, Gdansk (PL); Orlowski, Tomasz, Somerville, NJ (US)
(72) Inventor: Pietryka, Jedrzej, 80-299 Gdansk (PL); Szewczyk, Janusz, 83-000 Gdansk (PL); Krzeminski, Zbigniew, 80-283 Gdansk (PL); Orlowski, Tomasz, Somerville, 08876 NJ (US)
(74) Representative: Holzwarth-Rochford, Andreas
(86) International application number: PCT/US2015/056414
(87) International publication number: WO 2016/064840

(56) References cited:
- WO-A1-2006/003359
- WO-A1-2013/132234
- GB-A- 2 508 722
- US-A- 4 157 535
- US-A- 5 859 913
- US-A- 5 859 913
- US-A1- 2009 021 393
- US-A1- 2012 037 354
- US-B1- 6 587 037
- US-B2- 6 847 585

## Description

### TECHNICAL FIELD

The technology described in this document relates generally to data communication systems for downhole equipment and more particularly to systems and methods of communicating data over a three phase power system between downhole equipment and a surface.

### BACKGROUND

There has been a long history of instrument devices in the oil industry monitoring submersible pumps, and in particular, devices which superimpose data on the three phase power cable of such pumps. These devices generally use the ground isolation of the three phase system to allow power to be delivered to the downhole instrument and data to be recovered from the device at the surface. These systems remove the need for a separate cable to be installed between the gauge and the surface. Most of these conventional instrument systems utilize a direct current (DC) power source at the surface, injected using a high inductance, and a downhole device which, also connected through a high inductance, modulates this DC current supply in a manner that transmits information either as digital bit streams or analog variations like pulse width or height modulation. These conventional systems are negatively affected by insulation faults in the three phase power system, and frequently fail as a result of this. Further, such systems are slow in data transmission, having data rates typically less than 1 bit per second.

Document US 4,157,535, assigned to Balkanli discloses an example of communicating data over a three phase power system between downhole equipment and a surface, wherein a signal is transmitted as a sequence of frequencies. Document US 2012/0037354 assigned to McCoy et al. discloses another example of communicating data over a three phase power system between downhole equipment and a surface, wherein a plurality of bits or symbols are split and modulated simultaneously on a plurality of carrier frequencies using the Orthogonal Frequency Division Multiplexing technology.

Other conventional systems are faster in data transmission rate and more tolerant to insulation faults in the three phase power system, in comparison to the systems described above. These other conventional systems, however, still suffer from problems. For example, these systems do not provide a robust solution for dealing with harmonic noise from variable speed drives, which are frequently used to power submersible pumps. Thus, such a system may fail if harmonics are at the same frequency as a carrier frequency used in the system. Further, these systems do not provide any means of sustaining power to the downhole device.

### SUMMARY

The present disclosure is directed to systems and methods of communicating data over a three phase power system between downhole equipment and a surface. In an example method not part of the invention of communicating data over a three phase power system between downhole equipment and a surface, data words are transmitted between the downhole equipment and the surface using *n* distinct frequencies, with *n* being greater than 1. The transmission of a data word includes transmitting a signal comprising the *n* frequencies ordered in a unique sequence in time, where the unique sequence of frequencies is representative of the data word.

In an example method of communicating data over a three phase power system between downhole equipment and a surface, bits of data are transmitted between the downhole equipment and the surface. The transmission of a bit of data includes transmitting multiple frequencies simultaneously on a transmission line, where a unique combination of frequencies transmitted simultaneously is representative of the bit's value.

In another example method of communicating data over a three phase power system between downhole equipment and a surface, data words are transmitted between the downhole equipment and the surface. The transmission of a data word includes transmitting a unique sequence of frequency combinations, where each frequency combination comprises multiple frequencies transmitted simultaneously on a transmission line. The unique sequence of frequency combinations is representative of the data word.

### BRIEF DESCRIPTION OF THE FIGURES

Figs. 1A and 1B depict an example not part of the invention with signals comprising multiple frequencies ordered in unique sequences.
Fig. 1C depicts a transmission of bits of data, where each bit of data is represented by multiple frequencies transmitted simultaneously on a transmission line.
Fig. 1D depicts a transmission of a unique sequence of frequency combinations, each frequency combination including multiple frequencies transmitted simultaneously on a transmission line.
Fig. 2 depicts a block diagram of a multi-frequency coding system.
Fig. 3 depicts a block diagram of a data transmission system utilizing two frequencies.
Figs. 4 and 5 depict block diagrams of data transmission systems utilizing three frequencies.
Fig. 6 depicts a block diagram of a data transmission system utilizing four frequencies.
Figs. 7 and 8 depict example signals used in the systems and methods described herein.

### DETAILED DESCRIPTION

The approaches described herein implement data communications systems and associated methods of high speed data transmission for transferring data over a three phase power system. Such systems and methods may be used for data communication between a surface and downhole equipment, among other uses. Example downhole equipment includes a downhole sensor (DHS) for an arrangement such as an oil field electrical submersible pump (ESP). It is noted, however, that the systems and methods described herein are not limited to data communication between a surface and downhole equipment, and that the approaches described herein can be used in a wide variety of data communications systems.

As noted above, conventional systems used for data communication between a surface and downhole equipment suffer from a number of problems. For example, the conventional systems do not provide a robust solution for dealing with harmonic noise from variable speed drives, which are frequently used to power electrical submersible pumps. Thus, these systems may fail if such harmonics are at the same frequency as a carrier frequency used in the system. The systems and methods described herein may be used to remedy this problem, as described below, by enabling reliable transmission and decoding of signals even in the presence of harmonic noise. Additionally, a fundamental problem of information transmission systems using frequency transmitted signals to pass information is the degree of attenuation of the signal between the transmitter and the receiver. This problem is particularly severe in oil field pump monitoring because of the long cable lengths, which can be as high as 10Km. The systems and methods described herein may be used to address this problem by providing data transmission and detection methods suitable for robust decoding of signals which suffer from such attenuation.

Further, conventional systems do not provide robust or unique methods of decoding data and rely heavily on traditional frequency modulation (FM) decoding techniques. The problems of using such traditional FM decoding is that the information may contain time segments where the recovered signal is mostly noise and does not contain the transmitted carrier frequencies and also time segments where severe attenuation has made the signal so small that effective FM decoding is not possible. The systems and methods described herein do not rely on traditional FM decoding and instead provide unique solutions to decoding data. Substantially higher data rates may be achieved using the transmission and decoding methods described herein.

As described in detail below, the approaches of the instant disclosure include the transmission of information from downhole equipment to surface using either sequential frequency transmissions (*e.g*., transmitting a signal including *n* frequencies ordered in a unique sequence) and/or transmissions of multiple frequencies simultaneously. The transmitted multiple frequencies can be of regular or irregular patterns and transmitted in a way that differentiates the transmitted data from coherent motor supply (VSD) noise and/or background noise. The multiple frequencies transmitted are used to represent the data that is being transmitted in a way that is both unique to decode and able to be decoded in several ways to provide redundancy and noise immunity.

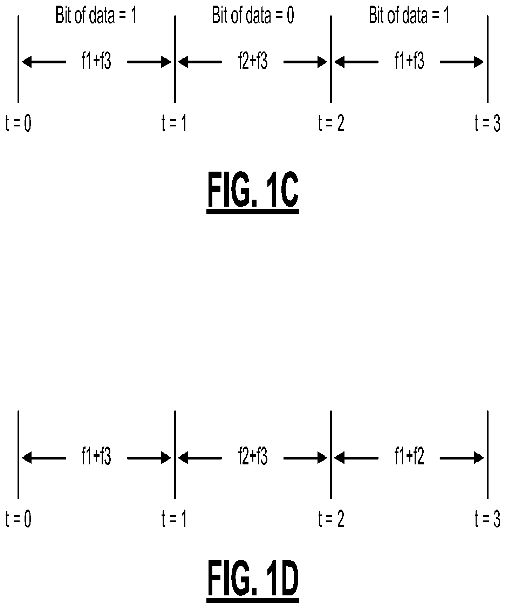

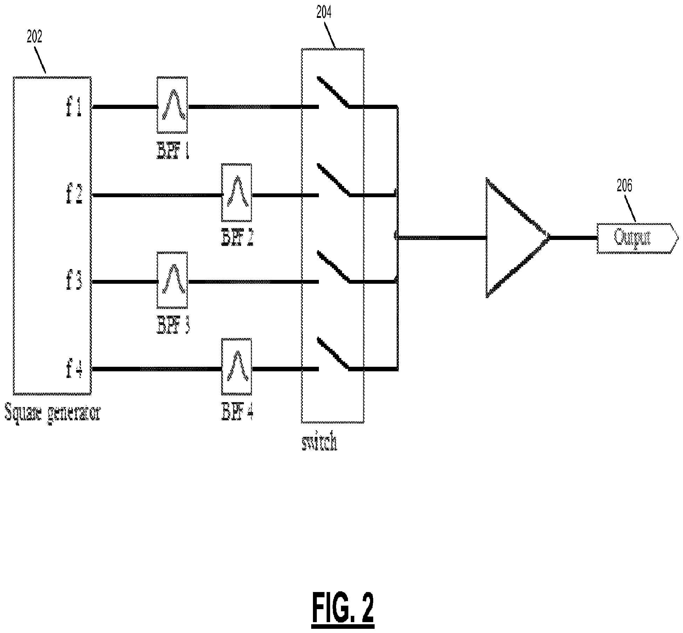

Time and frequency domain analysis techniques are used to provide a powerful and specific method of recovering specially encoded data that solves data decoding problems present in conventional systems. In this manner, the unique problems of transmitting and decoding data from a transmitter located downhole on a submersible pump are addressed. Figs. 1C-1D provide an overview of example techniques used in the systems and methods of the present disclosure. Additional details on such techniques are provided below with reference to Figs. 2-8.

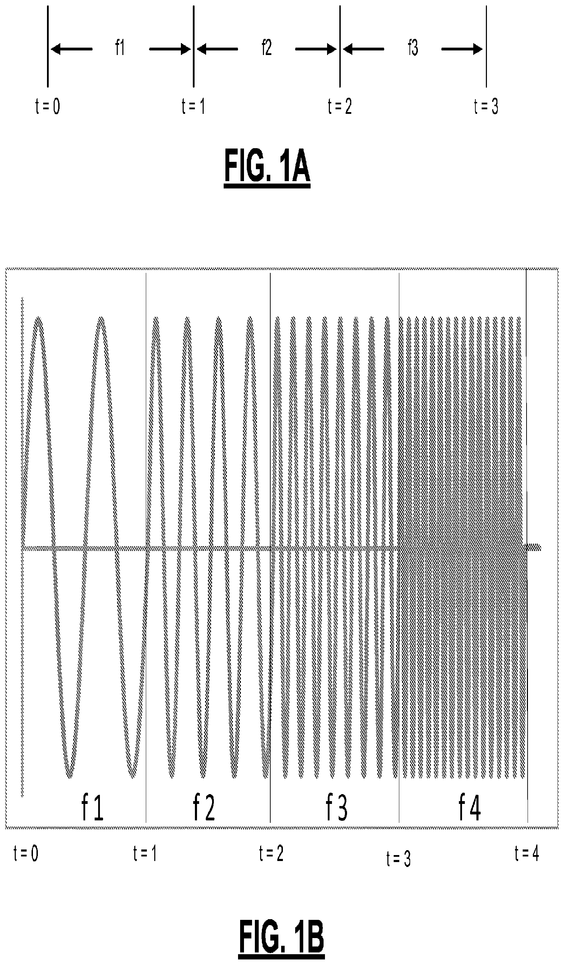

In an example method, not part of the invention, of communicating data over a three phase power system between downhole equipment and a surface, data words are transmitted between the downhole equipment and the surface using *n* distinct frequencies, with *n* being greater than 1. The transmission of a data word includes transmitting a signal comprising the *n* frequencies ordered in a unique sequence in time, where the unique sequence of frequencies is representative of the data word. To illustrate this, reference is made to Fig. 1A. As shown in this figure, a data word may be transmitted using *n* = 3 distinct frequencies (*i.e.*, noted as being f1, f2, and f3 in the figure). The transmission of the data word includes transmitting a signal including the three frequencies f1, f2, and f3 ordered in a unique sequence in time.

In the example of Fig. 1A, the unique sequence of "f1 | f2 | f3" represents a particular data word. By changing the sequence of the frequencies transmitted in the signal, other data words are transmitted (*e.g*., by changing the sequence to "f2 | f3 | fl," a second data word may be transmitted). In an example, the *n* distinct frequencies enable *n*! (*i.e.*, *n* factorial) unique data words to be transmitted. Thus, in the example of Fig. 1A, the use of *n* = 3 distinct frequencies enables 3! (*i.e.*, 1*2*3) unique data words to be transmitted. The example of Fig. 1A thus utilizes multiple frequencies, where such frequencies are transmitted in unique sequences that represent data words.

In the example of Fig. 1A, *n* can be any number greater than one. Thus, for example, Fig. 1B illustrates an example in which *n* = 4. In this example, the transmission of a data word includes transmitting a signal including the four frequencies (*i.e.*, f1, f2, f3, and f4, as illustrated in the figure) ordered in a unique sequence in time, where the unique sequence of frequencies represents a particular data word. In Fig. 1B, the sequence of "f1 | f2 | f3 | f4" represents one such data word. As shown in the figure, the transmission of the multiple frequencies may utilize sinusoidal waves, but it is noted that the frequencies may be transmitted utilizing square waves, rectangular waves, or other periodic signals in other examples.

In an example method of communicating data over a three phase power system between downhole equipment and a surface, bits of data are transmitted between the downhole equipment and the surface. The transmission of a bit of data includes transmitting multiple frequencies simultaneously on a transmission line, where a unique combination of frequencies transmitted simultaneously is representative of the bit's value. To illustrate this, reference is made to Fig. 1C. As shown in this figure, the transmission of a bit of data having a value of "1" may be accomplished by transmitting multiple frequencies fl+f3 simultaneously on a transmission line. To transmit a bit of data having a value of "0," multiple frequencies f2+f3 are transmitted simultaneously on the transmission line. Each unique combination of frequencies transmitted simultaneously is thus representative of a bit's value.

It is noted that the scheme illustrated in Fig. 1C (*e.g*., where "f1+f3" represents a "0" bit and "f2+f3" represents a "1" bit) is only an example, and other schemes are used in other examples. It is further noted that although the example of Fig. 1C utilizes *n* = 3 frequencies (*i.e.*, f1, f2, and f3, as illustrated in the figure), *n* can be any number greater than one.

In another example method of communicating data over a three phase power system between downhole equipment and a surface, data words are transmitted between the downhole equipment and the surface. The transmission of a data word includes transmitting a unique sequence of frequency combinations in time, where each frequency combination comprises multiple frequencies transmitted simultaneously on a transmission line. The unique sequence of frequency combinations is representative of the data word. To illustrate this, reference is made to Fig. 1D. As shown in this figure, a data word may be transmitted using a sequence of three frequency combinations. In the figure, a first frequency combination is "f1+f3," where these frequencies are transmitted simultaneously on a transmission line. A second frequency combination is "f2+f3," where these frequencies are transmitted simultaneously on the transmission line. A third frequency combination is "fl+f2," where these frequencies are transmitted simultaneously on the transmission line.

In the example of Fig. 1D, the unique sequence of "fl+f3 | f2+f3 | fl+f2" represents a particular data word. By changing the sequence of the frequency combinations, other data words are transmitted (*e.g*., by changing the sequence to "fl+f2 | f2+f3 | f1+f3" a second data word may be transmitted). The example of Fig. 1D may be seen as a combination of the methods described above with reference to Figs. 1A and 1C. Specifically, a sequence is used to represent a data word (*e.g*., as is used in the method of Fig. 1A) and each entry of the sequence includes a transmission of multiple frequencies simultaneously (*e.g*., as is used in the method of Fig. 1C). It is noted that although the example of Fig. 1D utilizes *n* = 3 frequencies (*i.e*., f1, f2, and f3, as illustrated in the figure), *n* can be any number greater than one.

As described in further detail below, with reference to Figs. 2-8, the approaches of the instant disclosure implement both a unique method of data transmission and also a unique method of decoding such data. Simultaneous frequency transmission can be used to either increase data compression and data rate, and/or to provide increased redundancy and provide a system which is not sensitive to interference at a single frequency, such as harmonic noise from a large three phase variable speed drive. With the system described herein using multi-frequency coding, fast data transmission can be achieved using a variety of signal frequencies (*e.g*., frequencies lower than 10kHz).

Fig. 2 is a block diagram of an example multiple frequency coding system that may be used in the approaches described herein. As shown in the figure, a frequency generator 202 (*e.g*., a square-wave generator, a sinusoidal wave generator, a rectangular wave generator, etc.) is capable of generating multiple frequencies. In the example of Fig. 2, one to four frequencies are used, although this can be extended to any number. The frequency generator 202 is coupled to switches 204. In this example, by closing a particular switch, a signal having one of the four frequencies f1, f2, f3, f4 is coupled to an output 206. By opening and closing the switches in different sequences in time, the different frequency signals appear in different sequences. Each sequence represents one and only one specific data word, and the data word is subsequently received and properly interpreted by a surface unit. The *n* number of frequencies used gives *n*! (*i.e*., 1*2*3*... **n*) possible sequences. In this manner, the example multiple frequency coding system may be used in implementing the method described above with reference to Fig. 1A.

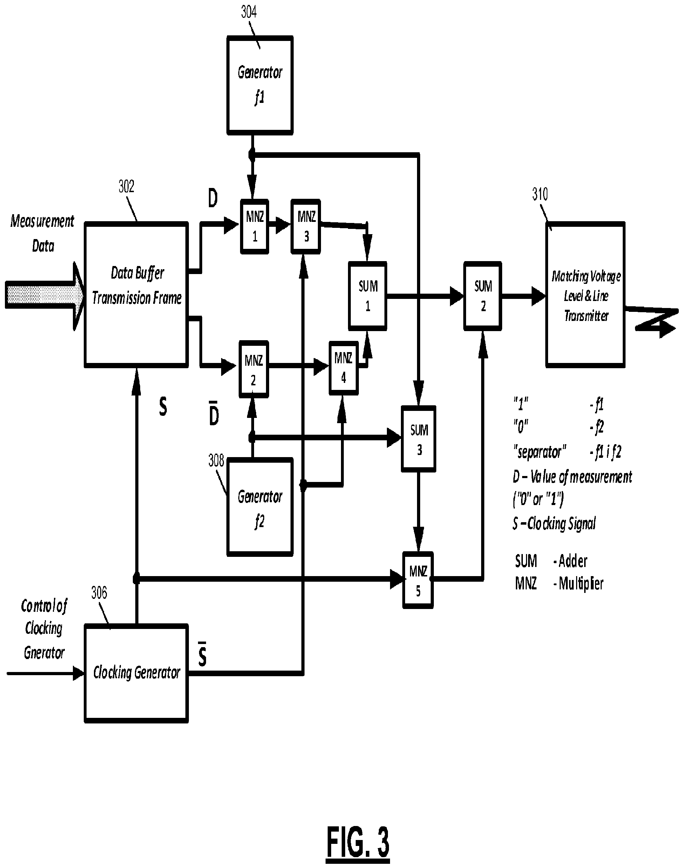

As described above with reference to Figs. 1C and 1D, methods of communicating data may include transmitting multiple frequencies simultaneously on a transmission line. An example system that may implement such a method is shown in Fig. 3. This figure shows an example of using two frequencies for transmission of a measurement data signal. A first of the two frequencies is used to transmit the logical value "1," and a second of the two frequencies is used to transmit the logical value "0." Specifically, an instance in the data transmission line signal with a frequency of f1 indicates a transferring of the value "1," and an instance in the data transmission line signal with a frequency of f2 indicates a transferring of the value "0," in the example of Fig. 3. This combination can be completed with a case in which two frequencies are transmitted simultaneously on the transmission line, which can be interpreted as a signal separation (*e.g*., space).

The signal separation is a data symbol representing neither "0" nor "1." The signal separation symbol can be used both to pass on information about the beginning/end of the data frame transmission (*e.g*., synchronization start/stop), as well as to the pass on information about possible separation of "zeros" and "ones" in the course of transmission within the frame. For example, similar to the structure used in Morse telegraphy signals, a long combination of f1 and f2 ("dash") may indicate a start/stop transmission of data frames, and a short combination ("dot") may indicate a separator of "zeros" and "ones" inside the same frame. The system of Fig. 3 enables relative simplicity in the underground part of the DHS transmission system, including a simplicity of logic, which allows for the implementation of both the software and hardware. Although the example of Fig. 3 may exhibit some sensitivity to noise at frequencies similar to those used in data transfer (*e.g*., sub-harmonic of converter drives), this can be counteracted by lengthening the duration of logic "1" and "0" and carefully selecting the carrier frequencies (*e.g*., so as to form a pair of primes).

In Fig. 3, measurement data and the device address are stored in a data buffer 302 to form a transmission frame. Such a frame, depending on the degree of complexity of the components, can contain one or more measurement data. In the case of cyclic buffer power, measuring device address can be added in the buffer 302, or it can be the default. The data buffer 302 is clocked from clock signal generator 306 whose output signal and the signal negation are used to control the signal transmission to the surface. In the case where the data (D) has a Boolean value "1," the carrier signal generated by the signal generator f1 304 is released in the block MNZ1 (1 x f1 = f1) and received at an adder SUM1. At the same time, when the negated output from the buffer is a Boolean value "0," this blocks the generator 308 output f2 in the block MNZ2.

The MNZ3 block is unlocked when it accepts the negated control signal from the clocking generator having a Boolean value "1," which means the system has completed the process of determining the value of output from the buffer data. Through block adders SUM1 and SUM2, the f1 signal is transmitted for the duration of a logical "1" to the matching circuit 310 for the voltage level transmission and line transmitter. The system functions in a similar manner when transmitting a logical "0" via the signal frequency f2.

Separation of the individual logical values of measurement data is carried out by generating a signal that is a superposition of signals with frequencies f1 and f2 (*e.g*., equal to f1+f2, by transmitting these two frequencies simultaneously). This is accomplished in adder block SUM3. The output from the adder block SUM3 is unlocked in block MNZ5 for the duration of the rewriting of the new value of the output data buffer, clocked by the signal from the clocking generator 306 having a logical "1." Through block SUM2, the separation signal fl+f2 is transmitted to the matching circuit 310 for the voltage level transmission and line transmitter.

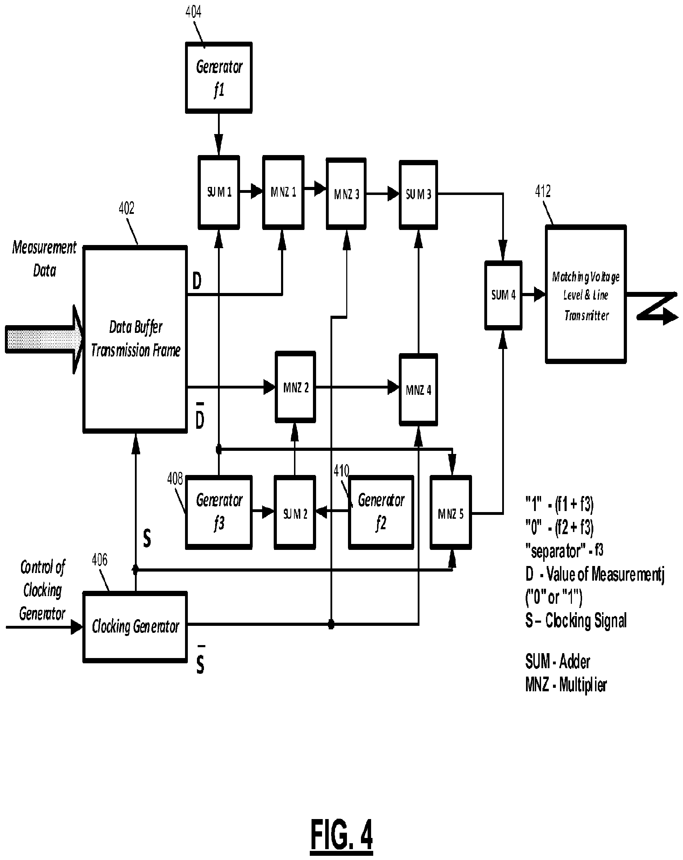

In Fig. 4, a third frequency is introduced, and this is designed to increase transmission immunity to electrical interference occurring in the signal transmission path, which may include the electric power supply to the pump motor. In this example, data signal transmission is a suitable combination of two of the three frequencies. Specifically, an instance of the data transmission signal that is the sum of the frequencies of signals f1 and f3 indicates a transferring of the value "1," and an instance of the data transmission signal that is the sum of the frequencies of signals f2 and f3 indicates a transferring of the value "0," in this example. This combination can be supplemented by the case in the transmission line where only the signal with a frequency f3 is transmitted, which can be interpreted as a signal separation (*e.g*., space). The signal separation symbol can be used to pass on information about the beginning/end of the data frame transmission (*e.g*., sync start/stop) and to pass on information about the possible separation of "zeros" and "ones" in the course of transmission inside the frame. Thus, it may be assumed that a longer duration signal in f3 ("dash") means a start/stop transmission of data frames, and a short duration ("dot") means a separation of "zeros" and "ones" inside the same broadcasting frame.

The system of Fig. 4 has a higher complexity than the system of Fig. 3, but the system of Fig. 4 has greater immunity to interference and sub-harmonics (*e.g*., coming from the pump motor control). In Fig. 4, measurement data and the device address are stored in the data buffer 402 to form a transmission frame. Such a frame, depending on the degree of complexity of the components, can contain one or more measurement data. In the case of cyclic buffer power, a measuring device address can be added in the buffer 402, or it can be the default. The data buffer 402 is clocked from clock signal generator 406 whose output signal and its signal negation are used to control the signal transmission to the surface. In the case where the data signal (D) has a Boolean value "1," the block MNZ1 releases the combination of frequencies f1+f3 (*i.e.*, 1 x (f1 + f3)). The signals f1 and f3 are generated by frequency generators 404 and 408, respectively. At the same time, when the output from the negated buffer is a Boolean value "0," this blocks the output of the block MNZ2 carrier signal (*i.e.*, 0 x (f2 + f3)). The signal f2 is generated by block 410.

The MNZ3 block is unlocked when it accepts the negated control signal from the clocking generator 406 having a Boolean value "0," which means that the system has completed the process of determining the value of output from the buffer data. Through adder blocks SUM3 and SUM4, carrier signal "1" (f1+f3) is transmitted for the duration of a logical "1" to a matching circuit 412 for the voltage level transmission and line transmitter. In a similar manner, a logical "0" is transmitted using a carrier signal that is the sum of the frequencies of signals f2 and f3. Separation of the individual logical values of measurement data is carried out through the use of a signal with a frequency f3 for the duration of the data feed in the data buffer 402. This is accomplished by using block MNZ5, which transmits its output to adder SUM4.

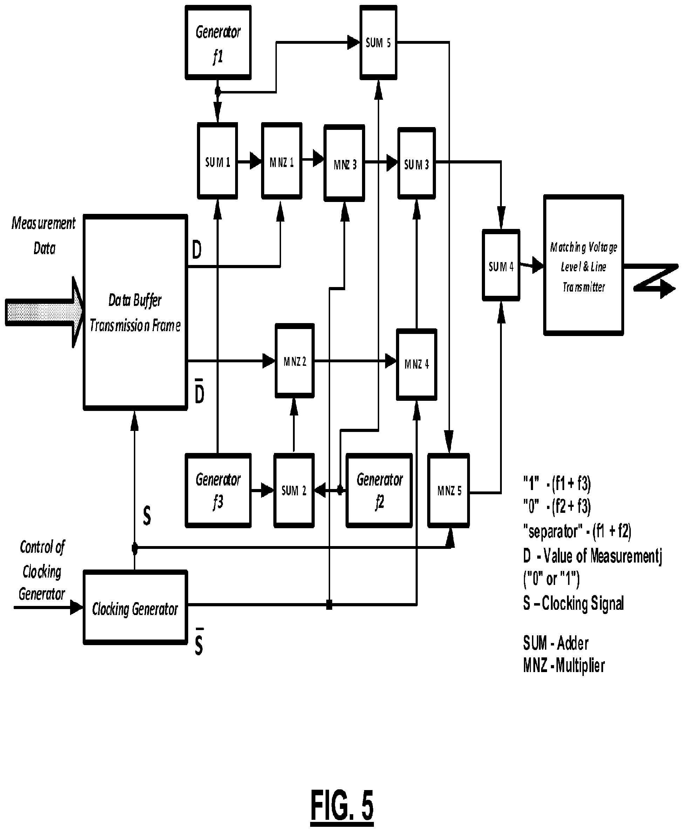

It is noted that in Fig. 4, the single frequency f3 used for the separator data symbol may be sensitive to interference. In an example, this sensitivity is eliminated by using a combination of frequencies for the separator data symbol. Such an example is shown in Fig. 5. The system of Fig. 5 operates in a manner that is similar to that of Fig. 4, except that the control characters' (start/stop and separator) carrier signal uses the sum of two signals in Fig. 5. In this example, the sum can be calculated by summing the signals with frequencies f1 and f2.

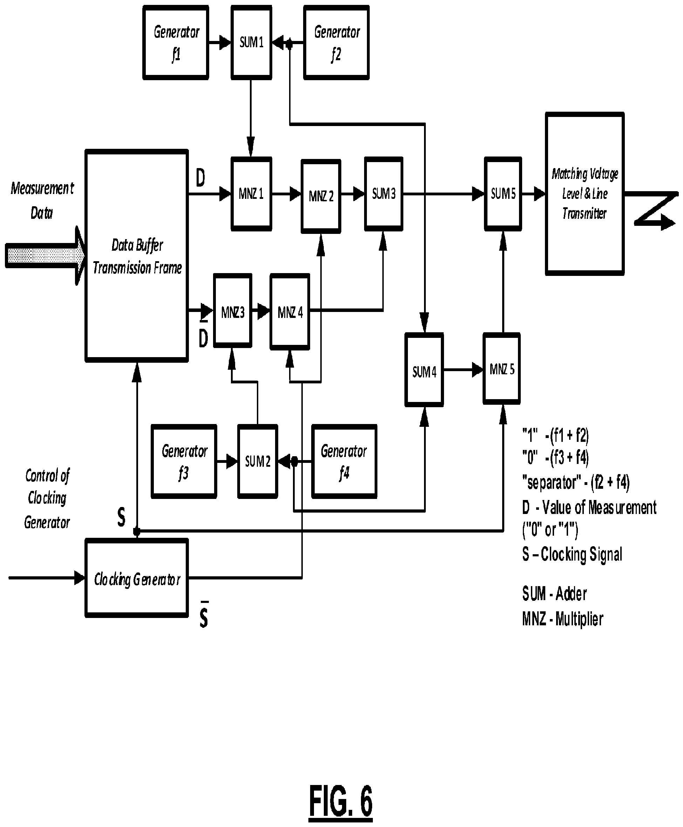

In Fig. 6, a fourth carrier frequency is introduced. This provides high immunity to interference for all transmitted components (*e.g*., logical values "0" and "1," separation, start and stop). In Fig. 6, an instance of the data transmission signal that is the sum of the signals of frequencies f1 and f2 indicates a transferring of the value "1," and an instance of the data transmission signal that is the sum of the signals of frequencies f3 and f4 indicates a transferring of the value "0." This combination can be supplemented by the case where in the transmission line signals, there is a sum of the frequencies of signals: <f1 & f3> or <f1 & f4> or <f2 & f3> or <f2 & f4>. Such pairs can be used to control the transmission, for example, as symbols: (1) the separation of "zeros" and "ones" within the frames of data transmission, (2) the beginning of the data frame transmission, (3) the end of the data frame transmission, and (4) the repetition of data frame transmission.

For each combination of the above-mentioned sum of signals, additional media information can be included using the duration of the signal (*e.g*., type "dot" and type "dash") which will increase the number of possible combinations of control symbols up to eight. This enables the system to significantly increase the immunity to potential transmission interference and decrease errors. Further, a different duration of the signals that make up each of the signals noted above may be introduced, in examples. Knowledge of the specific relationship between the duration of signals in the package (or any other combination than simple summation) allows for the expansion of the elements to increase the safety and security of the transmission. Fig. 6 shows an exemplary schematic diagram of a data transmission system based on the use of four carrier frequencies. The operation of the system of Fig. 6 is similar to that of Figs. 3-5.

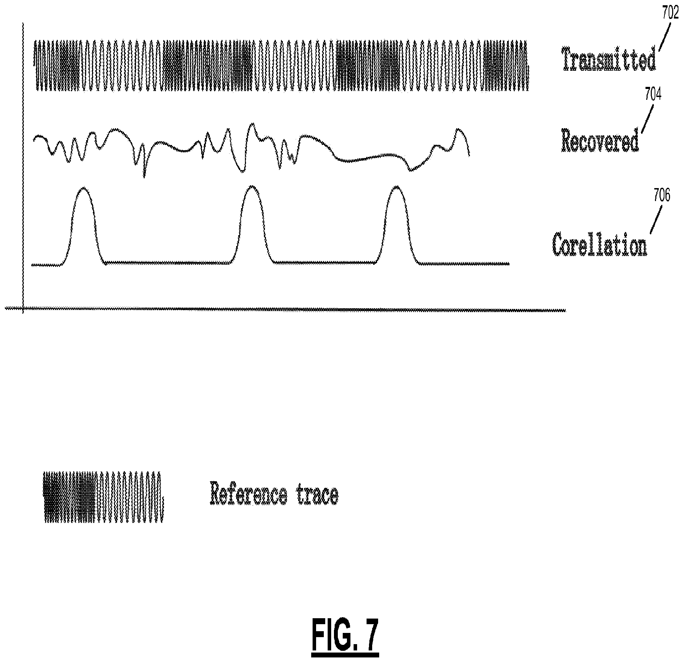

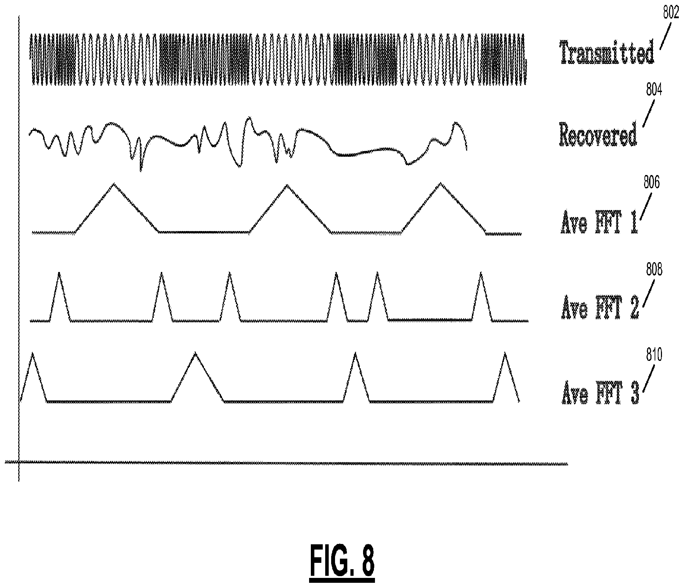

Figs. 1-6 describe a unique and inherently noise immune data transmission system. To complement this transmission system, systems and methods for decoding and retrieving information in the transmitted data are described below with reference to Figs. 7 and 8. Thus, as described below, data recovery can be accomplished in a unique way that provides robust data recovery in the presence of high signal attenuation and also significant coherent noise in the same frequency band of the data. The use of digital signal processing, as utilized in the systems and methods described below, can provide the opportunity to perform data processing that in analog systems would be difficult and in some cases not practical to implement. In the digital signal processing system, a processor system is able to capture an analog signal with sufficient speed and resolution such that digital filtering and other numerical processing can be applied to it.

It is noted that the digital processing may apply traditional filtering to acquired signals before any of the following process steps are applied. One benefit of the digital filtering is that it cannot resonate. Very narrow bandwidth and high gain analog filters are prone to free oscillation at the frequency center of the filter, and this is a problem not present with digital filtering. This has relevance in the decoding process because a free oscillating filter will generate a frequency at one of the FM carrier frequencies and can be erroneously decoded in a simple FM system as a "1" or a "0." By using patterns and sequences for each piece or bit of data (as used in the systems and methods described herein) this cannot happen.

Reference is now made to Fig. 7. In this example, the recovered signal 704 is sampled repeatedly in a time window that is the same length as the transmitted sequence. The transmitted sequence can include (i) single frequencies transmitted in a sequence, and/or (ii) frequency combinations (*e.g*., each frequency combination comprising multiple frequencies transmitted simultaneously) transmitted in a sequence, as described above. The data in this sampled window can then be processed by applying correlation 706 between the expected signal and the data recovered. In this manner, the transmitted data patterns 702 are recognized even with significant coherent noise, as the noise will not respond to the correlation.

Reference is now made to Fig. 8. There may be occasions where the recovered data is not of sufficiently high amplitude or is distorted by noise and other electrical signals. A process using a fast Fourier Transform (FFT) analysis, as illustrated in Fig. 8, can alleviate this issue. The process consists of sampling the recovered data 804 repeatedly in a window that is the same length as the transmitted sequence or combination of frequencies. The transmitted signal is shown at 802 in Fig. 8. An FFT is carried out on the sampled waveform, and this FFT is analyzed in small frequency windows for average amplitude. This is done repeatedly at a sample rate suitable for the pattern transmission rate that is being detected. This is shown at 806, 808, 810 in Fig. 8. Over a period of time, the only variation which will occur and alter in a sequence window to sequence window time frame will be the changing frequency combinations and patterns. The average FFT amplitude therefore will show these amplitude changes at the specific frequencies of interest, with the only limitation being the vertical sample resolution of the captured data. This provides a very powerful method of detecting specific frequency patterns and combinations even when the amplitude is both very low and considerably smaller than the background noise and harmonic interference.

The present disclosure is directed to systems and methods of communicating data over a three phase power system between downhole equipment and a surface. As described above, in one method not part of the invention for transmitting data, the data is comprised of a combination of multiple frequencies from 1 to *n* transmitted in a unique sequence so that it cannot be replicated by any other source of electrical noise. In a method for transmitting data, each bit of the data is transmitted simultaneously as a different frequency. These two methods may be combined, as described above. Also described herein is a method of transmitting and decoding data that includes sending data in a unique combination and/or sequence of frequencies, and correlation of the recovered data is performed to this known unique combination of frequencies and timing to provide robust decoding even in the presence of significant noise and coherent frequencies from another source. In addition, in a method of transmitting and decoding data, data is sent in a unique combination and/or sequence of frequencies, and repetitive Fourier transforms are performed to the recovered signal, specifically measuring average amplitude in a series of narrow frequency windows corresponding to the specific frequencies contained in the transmitted data. In this method, the average FFT amplitude may be correlated to a specific pattern of sequential frequency combinations in time.

This written description uses examples to disclose the invention, including the best mode, and also to enable a person skilled in the art to make and use the invention. The patentable scope of the invention includes other examples. Additionally, the methods and systems described herein may be implemented on many different types of processing devices by program code comprising program instructions that are executable by the device processing subsystem. The software program instructions may include source code, object code, machine code, or any other stored data that is operable to cause a processing system to perform the methods and operations described herein. Other implementations may also be used, however, such as firmware or even appropriately designed hardware configured to carry out the methods and systems described herein.

The systems' and methods' data (*e.g*., associations, mappings, data input, data output, intermediate data results, final data results, etc.) may be stored and implemented in one or more different types of computer-implemented data stores, such as different types of storage devices and programming constructs (*e.g*., RAM, ROM, Flash memory, flat files, databases, programming data structures, programming variables, IF-THEN (or similar type) statement constructs, etc.). It is noted that data structures describe formats for use in organizing and storing data in databases, programs, memory, or other computer-readable media for use by a computer program.

The computer components, software modules, functions, data stores and data structures described herein may be connected directly or indirectly to each other in order to allow the flow of data needed for their operations. It is also noted that a module or processor includes but is not limited to a unit of code that performs a software operation, and can be implemented for example as a subroutine unit of code, or as a software function unit of code, or as an object (as in an object-oriented paradigm), or as an applet, or in a computer script language, or as another type of computer code. The software components and/or functionality may be located on a single computer or distributed across multiple computers depending upon the situation at hand.

## Claims

1. A method of communicating data over a three phase power system between downhole equipment and a surface, the method comprising:
transmitting bits of data between the downhole equipment and the surface, wherein the transmission of a bit of data includes transmitting multiple frequencies (f1, f2, f3, f4) simultaneously on a transmission line, and wherein a unique combination of frequencies transmitted simultaneously is representative of the bit's value.

2. A method of communicating data over a three phase power system between downhole equipment and a surface, the method comprising: transmitting data words between the downhole equipment and the surface, wherein the transmission of a data word includes transmitting a unique sequence of frequency combinations, each frequency combination comprising multiple frequencies (f1, f2, f3, f4) transmitted simultaneously on a transmission line, the unique sequence of frequency combinations being representative of the data word.

3. The method of claim 1, wherein a first combination of frequencies transmitted simultaneously on the transmission line is representative of a bit having a value of 0, and wherein a second combination of frequencies transmitted simultaneously on the transmission line is representative of a bit having a value of 1, wherein preferably a third combination of frequencies transmitted simultaneously on the transmission line is representative of a control symbol having a value of neither 0 nor 1.

4. The method of claim 1 or 2, wherein the combination of frequencies transmitted simultaneously is not found in sources of electrical noise.

5. The method of claim 1 or 2, further comprising:
receiving the transmitted signal and sampling the received signal repeatedly in a time window that is the same length as the transmitted sequence or combination of frequencies, and
processing the data in the sampled window by applying correlation between an expected signal and the data recovered, wherein the sampling and processing are performed to decode the data.

6. The method of claim 5, wherein the correlation is applied to decode the data in the presence of noise or coherent frequencies from another source.

7. The method of claim 1, further comprising:
receiving the transmitted signal and sampling the received signal repeatedly in a time window that is the same length as the combination of frequencies; and
processing the data in the sampled window by applying a fast Fourier Transform (FFT) on the sampled waveform, wherein the sampling and processing are performed to decode the data.

8. The method of claim 7, further comprising: analyzing the FFT in small frequency windows for average amplitude.

9. The method of claim 2, further comprising:
receiving the transmitted signal and sampling the received signal repeatedly in a time window that is the same length as the transmitted sequence or combination of frequencies;
processing the data in the sampled window by applying a fast Fourier Transform (FFT) on the sampled waveform, wherein the sampling and processing are performed to decode the data; and
analyzing the FFT in small frequency windows for average amplitude.

## Patentansprüche

1. Verfahren zum Übertragen von Daten über ein Dreiphasen-Energieversorgungsystem zwischen einer Bohrlochausrüstung und einer Oberfläche, wobei das Verfahren umfasst:
Übertragen von Datenbits zwischen der Bohrlochausrüstung und der Oberfläche, wobei die Übertragung eines Datenbits das gleichzeitige Übertragen mehrerer Frequenzen (f1, f2, f3, f4) auf einer Übertragungsleitung einschließt und wobei eine eindeutige Kombination von gleichzeitig übertragenen Frequenzen den Wert des Bits darstellt.

2. Verfahren zum Übertragen von Daten über ein Dreiphasen-Energieversorgungsystem zwischen einer Bohrlochausrüstung und einer Oberfläche, wobei das Verfahren umfasst:
Übertragen von Datenwörtern zwischen der Bohrlochausrüstung und der Oberfläche, wobei die Übertragung eines Datenwortes das Übertragen einer eindeutigen Sequenz von Frequenzkombinationen einschließt, wobei jede Frequenzkombination mehrere gleichzeitig auf einer Übertragungsleitung übertragene Frequenzen (f1, f2, f3, f4) umfasst, wobei die eindeutige Sequenz von Frequenzkombinationen das Datenwort darstellt.

3. Verfahren nach Anspruch 1, wobei eine erste Kombination von gleichzeitig auf der Übertragungsleitung übertragenen Frequenzen ein Bit mit einem Wert 0 darstellt und wobei eine zweite Kombination von gleichzeitig auf der Übertragungsleitung übertragenen Frequenzen ein Bit mit einem Wert 1 darstellt, wobei vorzugsweise eine dritte Kombination von gleichzeitig auf der Übertragungsleitung übertragenen Frequenzen ein Steuersymbol darstellt, dessen Wert weder 0 noch 1 ist.

4. Verfahren nach Anspruch 1 oder 2, wobei die Kombination von gleichzeitig übertragenen Frequenzen nicht in Quellen elektrischen Rauschens zu finden ist.

5. Verfahren nach Anspruch 1 oder 2, ferner umfassend:
Empfangen des übertragenen Signals und wiederholtes Abtasten des empfangenen Signals in einem Zeitfenster, das die gleiche Länge wie die übertragene Sequenz oder Kombination von Frequenzen hat, und
Bearbeiten der Daten in dem abgetasteten Fenster durch Anwenden einer Korrelation zwischen einem erwarteten Signal und den wiederhergestellten Daten, wobei das Abtasten und Bearbeiten durchgeführt werden, um die Daten zu decodieren.

6. Verfahren nach Anspruch 5, wobei die Korrelation angewandt wird, um die Daten in Anwesenheit von Rauschen oder kohärenten Frequenzen aus einer anderen Quelle zu decodieren.

7. Verfahren nach Anspruch 1, ferner umfassend:
Empfangen des übertragenen Signals und wiederholtes Abtasten des empfangenen Signals in einem Zeitfenster, das die gleiche Länge wie die Kombination von Frequenzen hat; und
Bearbeiten der Daten in dem abgetasteten Fenster durch Anwenden einer schnellen Fourier-Transformation (FFT) auf die abgetastete Wellenform, wobei das Abtasten und Bearbeiten durchgeführt werden, um die Daten zu decodieren.

8. Verfahren nach Anspruch 7, ferner umfassend:
Analysieren der FFT in kleinen Frequenzfenstern auf die durchschnittliche Amplitude.

9. Verfahren nach Anspruch 2, ferner umfassend:
Empfangen des übertragenen Signals und wiederholtes Abtasten des empfangenen Signals in einem Zeitfenster, das die gleiche Länge wie die übertragene Sequenz oder Kombination von Frequenzen hat;
Bearbeiten der Daten in dem abgetasteten Fenster durch Anwenden einer schnellen Fourier-Transformation (FFT) auf die abgetastete Wellenform, wobei das Abtasten und Bearbeiten durchgeführt werden, um die Daten zu decodieren; und
Analysieren der FFT in kleinen Frequenzfenstern auf die durchschnittliche Amplitude .

## Revendications

1. Procédé de communication de données par un système de puissance triphasé entre un équipement de fond de puits et la surface, ledit procédé comprenant :
la transmission de bits de données entre l'équipement de fond de puits et la surface, la transmission d'un bit de données comprenant la transmission simultanée de fréquences multiples (f1, f2, f3, f4) sur une ligne de transmission, et une unique combinaison de fréquences transmises simultanément étant représentative de la valeur de bit.

2. Procédé de communication données par un système de puissance triphasé entre un équipement de fond de puits et la surface, ledit procédé comprenant :
la transmission de mots de données entre l'équipement de fond de puits et la surface, la transmission d'un mot de données comprenant la transmission d'une unique séquence de combinaisons de fréquences, chaque combinaison de fréquences comprenant des fréquences multiples (f1, f2, f3, f4) transmises simultanément sur une ligne de transmission, l'unique séquence de combinaisons de fréquences étant représentative du mot de données.

3. Procédé selon la revendication 1, où une première combinaison de fréquences transmises simultanément sur la ligne de transmission est représentative d'un bit ayant la valeur 0, et où une deuxième combinaison de fréquences transmises simultanément sur la ligne de transmission est représentative d'un bit ayant la valeur 1, une troisième combinaison de fréquences transmises simultanément sur la ligne de transmission étant préférentiellement représentative d'un symbole de commande n'ayant ni la valeur 0 ni la valeur 1.

4. Procédé selon la revendication 1 ou la revendication 2, où la combinaison de fréquences transmises simultanément n'est pas trouvée dans les sources de bruit électrique.

5. Procédé selon la revendication 1 ou la revendication 2, comprenant en outre :
la réception du signal transmis et l'échantillonnage du signal reçu de manière répétée dans une fenêtre temporelle de même longueur que la séquence ou la combinaison de fréquences transmises,
et le traitement des données dans la fenêtre échantillonnée par application d'une corrélation entre un signal attendu et les données récupérées, l'échantillonnage et le traitement étant exécutés pour décoder les données.

6. Procédé selon la revendication 5, où la corrélation est appliquée pour décoder les données en présence de bruit ou de fréquences cohérentes d'une autre source.

7. Procédé selon la revendication 1, comprenant en outre :
la réception du signal transmis et l'échantillonnage du signal reçu de manière répétée dans une fenêtre temporelle de même longueur que la combinaison de fréquences ; et
le traitement des données dans la fenêtre échantillonnée par application d'une transformation de Fourier rapide (FFT) sur la forme d'onde échantillonnée, l'échantillonnage et le traitement étant exécutés pour décoder les données.

8. Procédé selon la revendication 7, comprenant en outre :
l'analyse de la FFT dans des petites fenêtres de fréquences pour une amplitude moyenne.

9. Procédé selon la revendication 2, comprenant en outre :
la réception du signal transmis et l'échantillonnage du signal reçu de manière répétée dans une fenêtre temporelle de même longueur que la séquence ou la combinaison de fréquences transmises ;
le traitement des données dans la fenêtre échantillonnée par application d'une transformation de Fourier rapide (FFT) sur la forme d'onde échantillonnée, l'échantillonnage et le traitement étant exécutés pour décoder les données ; et
l'analyse de la FFT dans des petites fenêtres de fréquences pour une amplitude moyenne.
